# EUROPEAN PATENT APPLICATION

(11) **EP 2 202 720 A1**
(43) Date of publication of application: **30.06.2010**
(21) Application number: 09156914.5
(22) Date of filing: 31.03.2009
(51) Int. Cl.: G09G 3/36, H04N 13/00

(54) **Liquid crystal display apparatus and displaying method thereof for compensating image signals**

(30) Priority: 26.12.2008 KR 20080134194
(71) Applicant: Samsung Electronics Co., Ltd., Suwon-si, Gyeonggi-do 442-742 (KR)
(72) Inventor: Choi, Kyoung-oh, Seoul (KR)
(74) Representative: D'Halleweyn, Nele Veerle Trees Gertrudis

(57) **Abstract**

Apparatuses and methods consistent with the present invention relate to a liquid crystal display (LCD) apparatus and a displaying method thereof. A liquid crystal display (LCD) apparatus (100) includes a display unit (10) to which image signals are sequentially scanned; and an image processing unit (30) which compensates the image signals to have different compensation levels according to points in time when they are scanned to the display unit (10), using a previous frame image signal, a current frame image signal and a plurality of compensation tables, and outputs the compensated image signals to the display unit (10) as the current frame. Thus, the present invention provides a liquid crystal display (LCD) apparatus (100) improved in response speed and a displaying method thereof.

## Description

### BACKGROUND OF INVENTION

### FIELD OF INVENTION

Apparatuses and methods consistent with the present invention relate to a liquid crystal display (LCD) apparatus and a displaying method thereof, and more particularly, to a LCD apparatus that displays three-dimensional (3D) images and a displaying method thereof.

### DESCRIPTION OF THE RELATED ART

The technological development has enabled a display apparatus to process and display various types of image signals, regardless of whether the signals are digital or analog. Currently, a user can watch a stereoscopic image that is a three-dimensional (3D) image signal (hereinafter referred to as "a stereoscopic image signal") through a display apparatus, such as a monitor, a television, or the like. In general, the stereoscopic image signal requires an image to be divided for left and right eyes of a user, which differs from a two-dimensional (2D) image signal (hereinafter referred to as "a plane image signal") which does not need to be divided. Also, it is necessary that the divided images, for left and right eyes, are respectively displayed.

To enable a user to experience the stereoscopic image based on the images divided for left and right eyes, the user utilizes a polarized-glasses method using a phase-difference filter or a shutter-glasses method in which the left and right eye images are alternately displayed by switching on and off shutter-glasses.

There are a variety of display apparatuses, among which a liquid crystal display (LCD) apparatus obtains a desired image by applying an electric field to a liquid crystal material having anisotropic permittivity and inserted between two substrates, and adjusting the quantity of light transmitted to the substrates through adjustment of the strength of the electric field. In the LCD apparatus, the speed for responding to the electric field is a very important factor in preventing an afterimage or a blur of a moving image.

### SUMMARY OF THE INVENTION

Accordingly, an aspect of the present invention is to provide a liquid crystal display (LCD) apparatus and a displaying method thereof with improved in response speed.

Another aspect of the present invention is to provide a liquid crystal display (LCD) apparatus and a displaying method thereof capable of preventing an afterimage of left and/or right eye images.

The foregoing and/or other exemplary embodiments of the present invention can be achieved by providing a liquid crystal display (LCD) apparatus, including: a display unit to which image signals are sequentially scanned; and an image processing unit which compensates the image signals to have different compensation levels according to points in time when they are scanned to the display unit, using a previous frame image signal, a current frame image signal and a plurality of compensation tables, and outputs the compensated image signals to the display unit as the current frame.

While a frame image signal is being scanned, the compensation level may become larger as the scanning point in time becomes later while a frame image signal is being scanned.

Each of the compensation tables may include a dynamic capacitance compensation table.

The image signal may include a left eye image signal and a right eye image signal; and the image processing unit may compensate the left eye image signal and the right eye image signal and output them alternately to the display unit.

The LCD apparatus may further include a signal transmitting unit which outputs a control signal alternately to open external shutter glasses.

A frame may have an image scanning period during which an image signal is scanned and a blanking period during which the scanned image signal is maintained, and the control signal may open the shutter glasses for the blanking period.

The LCD apparatus may further include a storage unit which stores the plurality of compensation tables therein.

The plurality of compensation tables may include a first compensation table corresponding to the first spot and a second compensation table corresponding to the second spot, which is different from the first spot, and the image processing unit may operate an interpolation value based on the first and the second compensation tables, and compensate an image signal to be scanned between the first and the second spots using the interpolation value.

The foregoing and/or other exemplary embodiments of the present invention can be achieved by providing a liquid crystal display (LCD) apparatus, including: a liquid crystal panel which includes a liquid crystal layer, to which image signals are sequentially scanned; a storage unit which stores a plurality of compensation tables therein, compensating a response speed of a liquid crystal layer by different compensation levels; and an image processing unit which compensates an image signal, using a compensation table whose compensation level is larger with respect to the image signal scanned to the liquid crystal panel later, and outputs the compensated image signals to the liquid crystal panel.

The foregoing and/or other exemplary embodiments of the present invention can be achieved by providing a displaying method of a liquid crystal display (LCD) apparatus including a display unit, including: receiving a previous frame image signal and a current frame image signal; compensating the image signals to have different compensation levels according to points in time when they are scanned to the display unit, using the previous frame image signal, the current frame image signal and a plurality of compensation tables; and scanning the compensated image signals sequentially to the display unit as the current frame.

According to an exemplary embodiment of the present invention, there is provided a liquid crystal display (LCD) apparatus and a displaying method thereof improved in response speed.

According to an exemplary embodiment of the present invention, there is provided a liquid crystal display (LCD) apparatus and a displaying method thereof capable of preventing an afterimage of left and/or right eye images.

### BRIEF DESCRIPTION OF THE DRAWINGS

Aspects of the present invention will become apparent and more readily appreciated from the following description of the exemplary embodiments, with reference to the accompanying drawings, in which:
FIG. 1 is a control block diagram of an LCD apparatus according to an exemplary embodiment of the present invention;
FIG. 2 is a signal waveform diagram of scanning an image signal by the LCD apparatus of FIG. 1;
FIG. 3 shows the points in time when the image signal is scanned to the LCD apparatus of FIG. 1;
FIGS. 4A and 4B are graphs depicting grayscales of the image signal for compensation of the image signal according to the LCD apparatus of FIG. 1;
FIG. 5 illustrates a compensation table according to an exemplary embodiment of the LCD apparatus of FIG. 1;
FIG. 6 illustrates a compensation table according to another exemplary embodiment of the LCD apparatus of FIG. 1; and
FIG. 7 is a control flow chart of the method of the LCD apparatus of FIG. 1.

### DETAILED DESCRIPTION OF EXEMPLARY EMBODIMENTS OF THE INVENTION

Reference will now be made in detail to exemplary embodiments of the present invention, examples of which are illustrated in the accompanying drawings, so as to be easily understood by a person having ordinary knowledge in the art, wherein like reference numerals refer to like elements. The exemplary embodiments are described below so as to explaining the present invention by referring to the figures. Repetitive description with respect to like elements of different exemplary embodiments may be omitted for the sake of clarity. The present invention may be embodied in various forms without being limited to the exemplary embodiments set forth herein.

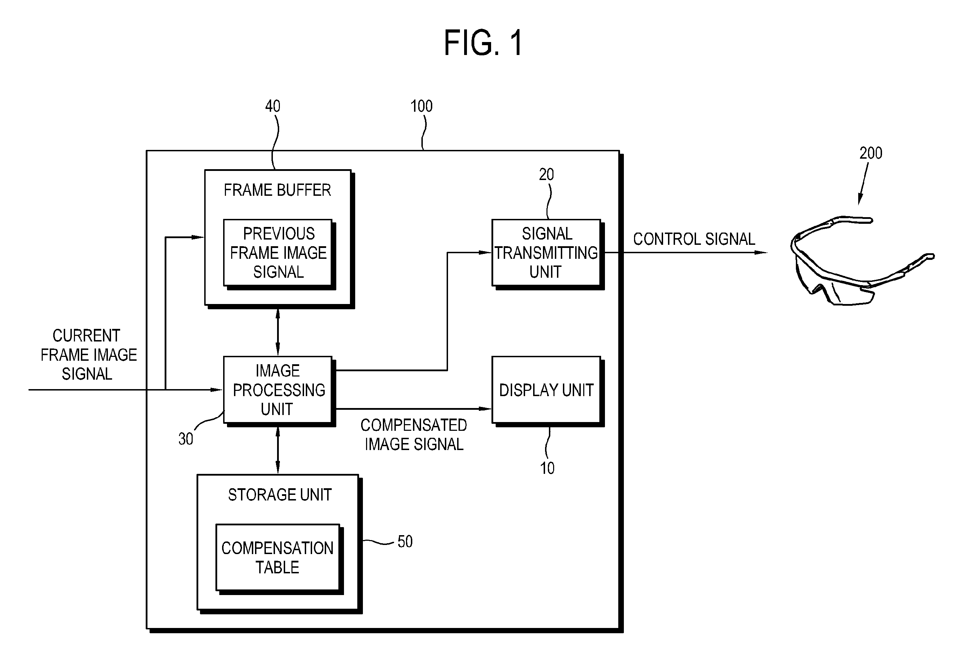

FIG. 1 is a control block diagram of an LCD apparatus according to an exemplary embodiment of the present invention.

As illustrated FIG. 1, the LCD apparatus 100 comprises a display unit 10, a signal transmitting unit 10, a frame buffer 40 storing a previous frame image signal therein, a storage unit 50 storing a compensation table therein, and an image processing unit 30 processing the image signal. The LCD apparatus 100 according to an exemplary embodiment present invention may be embodied by a television that receives and displays a broadcasting signal, a monitor connected to a computer main body, or a portable terminal such as a mobile phone with a display.

The LCD apparatus 100 receives and displays a 2D image signal, i.e., a plane image signal, or a 3D image signal, i.e., a stereoscopic image signal. The stereoscopic image signal is divided into an image signal for a user's left eye and an image signal for the user's right eye, such that the left eye image signal and the right eye image signal are alternately displayed.

The display unit 10 comprises a liquid crystal panel (not shown) and a panel driving unit (not shown) driving the liquid crystal panel, and displays an image signal output from the image processing unit 30. The liquid crystal panel comprises two substrates each including a thin film transistor and a color layer, and a liquid crystal layer inserted between the two substrates. If a grayscale voltage corresponding to the image signal is applied to the liquid crystal layer, the arrangement of liquid crystal molecules is changed and the brightness of the image is adjusted according to the quantity of light. The color of an image is adjusted by the light passing through the color layer, and the brightness of the image is adjusted according to the quantity of light. As the response speed, which refers to a speed of changing the arrangement of the liquid crystal molecules in response to a grayscale voltage, becomes faster, the afterimage is decreased and the picture quality is enhanced. In this respect, the response speed is an important factor in driving the liquid crystal panel. The image signal is scanned according to a certain direction of the display unit 10, and a frame image signal is displayed for a predetermined period. The display unit 10 is generally rectangular in shape.

The LCD apparatus 100 further comprises a backlight assembly (not shown) that supplies the light to the display unit 10. The backlight assembly may comprise a line light source, such as a lamp, or a spot light source, such as a light emitting diode (LED).

The signal transmitting unit 20 transmits to the shutter glasses 200 a control signal to alternately open a left shutter and a right shutter of the shutter glasses 200. In the stereoscopic image signal, the image signal for the left eye is visually perceived by the left eye of the user if the left shutter of the shutter glasses 200 is opened, and the image signal for the right eye is visually perceived by the right eye of the user if the right shutter of the shutter glasses 200 is opened. In other words, the LCD apparatus 100 according to this exemplary embodiment displays a stereoscopic image signal in a shutter glasses method. The signal transmitting unit 20 may comprise an infrared ray transmitting unit.

The shutter glasses 200 alternately open and close the left shutter and the right shutter thereof, synchronously with the control signal output from the signal transmitting unit 20. The shutter glasses 200 may comprise a liquid crystal shutter.

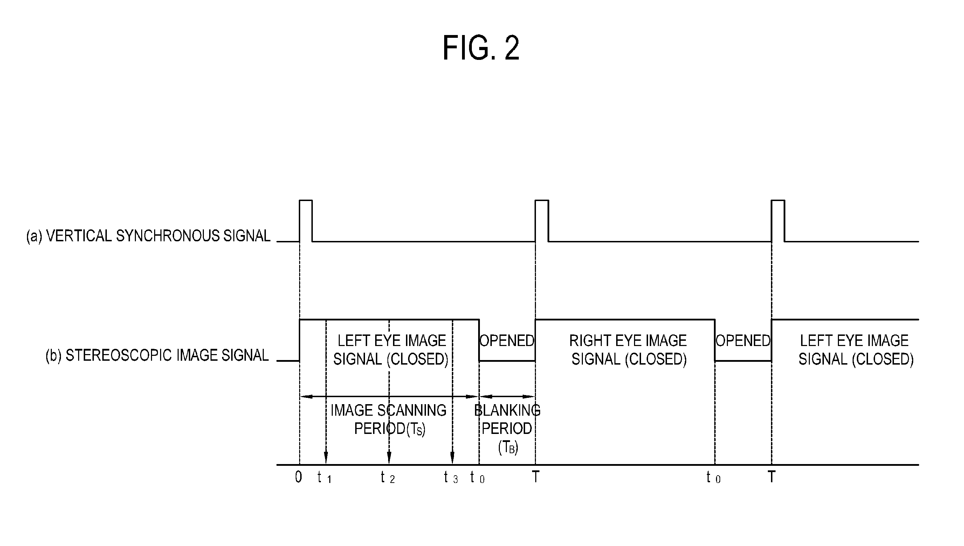

The image processing unit 30 processes a stereoscopic image signal input from the outside and displays the image on the display unit 10. The image processing unit 30 also controls the signal transmitting unit 20 such that the shutter glasses 200 are opened for the predetermined period. FIG. 2 is a signal waveform diagram illustrating the scanning of an image signal by the LCD apparatus of FIG. 1. As shown therein, a frame image signal is displayed on the display unit 10 for a predetermined period of time T, and each frame image signal can be distinguished by a vertical synchronous signal (a). With respect to the stereoscopic image signal (b), the left eye image signal and the right eye image signal are alternately displayed on the display unit 10 for each period T. A frame is composed of an image scanning period T_{S} during which to scan the image signal and a blanking period T_{B} during which to maintain the scanned image signal. According to an exemplary embodiment, the blanking period T_{B} can be adjusted, based on a resolution of the display unit 10, a response speed of the liquid crystal layer, and so on, and may be set to be approximately 20% to 40% of the period T. The signal transmitting unit 20 according to this exemplary embodiment outputs a control signal to open the shutter glasses 200 at the time to when the blanking period T_{B} begins to maintain the image signal and after the image signal has entirely been scanned. The shutter glasses 200 are closed for the image scanning period T_{S}. While the shutter glasses 200 are closed, the user cannot visually perceive the image.

The blanking period of a 2D image signal is shorter than the blanking period T_{B} of a 3D image signal. In case of the 2D image signal, as there is no distinction between the left eye image signal and the right eye image signal, there is no afterimage or blurring problem even though the user sees an image while the image signal is being scanned. However, in case of the 3D image signal, as the left eye image signal and the right eye image signal are alternately displayed by frame, the left and the right eye image signals coexist in a frame while the image signal is being scanned. Where the user sees an image for the image scanning period T_{S}, the image may be unclear or overlapped because of an afterimage from the previous frame. To prevent problems in case of the stereoscopic image signal, the shutter glasses 200 are opened only for the blanking period T_{B} after the image signal has entirely been scanned to the display unit 10.

According to one exemplary embodiment of the present invention, the backlight assembly can supply the light only for the blanking period T_{B} during which the user visually perceives the image, and block the light for the image scanning period T_{S}, in order to save on consumption of power.

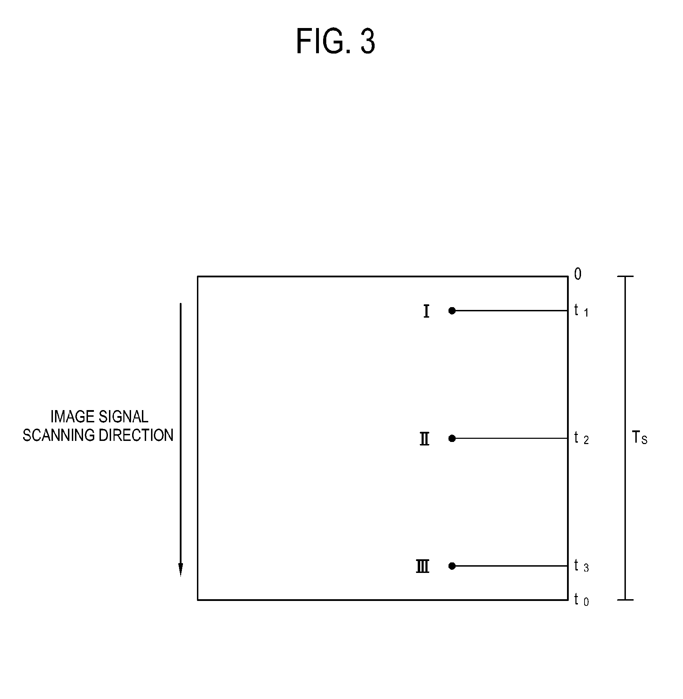

FIG. 3 illustrates the points in time when the image signal is scanned to the display unit 10. As described above in detail, the image signals are scanned sequentially according to a shorter-side direction of the display unit 10. The point when scanning of a frame image signal starts is considered as the zero point in time. A first point in time t₁ corresponding to when an image signal is applied to a first spot I, which is positioned in the upper part of the display unit 10 and is earlier than a second point in time t₂, which corresponds to a second spot II. A third point in time t₃ corresponding to when the image signal is applied to a third spot III, such that a third spot III positioned lower than the first spot I and the second spot II. As the shutter glasses 200 are opened after the frame image signal has entirely been scanned, the time that the image signal is exposed to the user varies depending upon a scanning point in time of the image signal. The image signal of the first spot I is visually perceived by the user after T_{S}-t₁ has passed, the image signal of the second spot II is visually perceived by the user after T_{S}-t₂ has passed, and the image signal of the third spot III is visually perceived by the user after T_{S}-t₃ has passed. As the scanning point in time of the image signal becomes later, it is exposed to the user sooner.

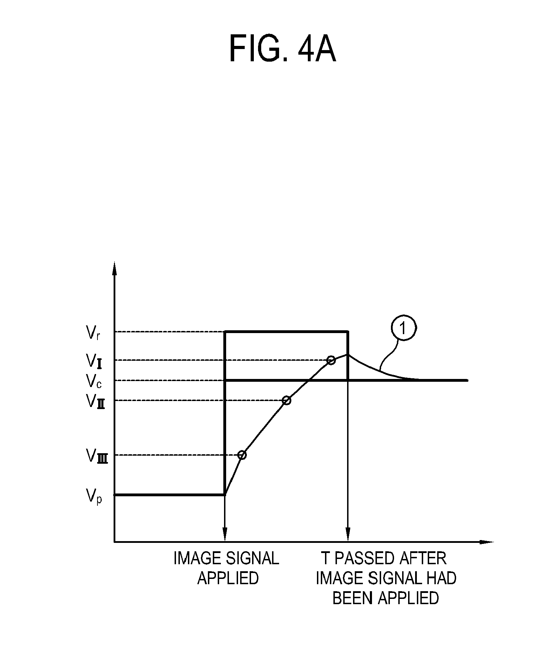

The image processing unit 30 compensates an image signal in order to improve the response speed of liquid crystal, using the previous frame image signal, the current frame image signal, and a plurality of compensation tables. As described above in detail, it takes some time to charge the liquid crystal to a predetermined target voltage (e.g., grayscale voltage corresponding to the image signal) in response to the applied voltage. Where the response speed of the liquid crystal reacting with the voltage is slow, it is difficult to execute the moving image due to a blur phenomenon. To improve the slow response speed of the liquid crystal, a dynamic capacitance compensation (DCC) method is used whereby a voltage corresponding to a higher grayscale than a set grayscale is applied to the liquid crystal. FIG. 4A is a graph depicting a grayscale voltage of an image signal where DCC has been performed. Where the grayscale voltage of the current frame image signal (V_{c}) is not identical to, but instead is higher than the grayscale voltage of the previous frame image signal (Vₚ), an overdriven compensation voltage (Vᵣ) is applied as the current frame image signal. Where the grayscale voltage of the current frame image signal (V_{c}) is lower than the grayscale voltage of the previous frame image signal (Vₚ), a voltage, which is underdriven and lower than the grayscale of the current frame image signal, is applied as the image signal. In FIG. 4A, ① depicts a liquid crystal voltage at which the liquid crystal layer reacts with DCC. The liquid crystal is charged with the higher voltage than the grayscale voltage of the current frame image signal (V_{c}) and is then converged into the grayscale of the current frame image signal (V_{c}). The compensation voltage (Vᵣ) is determined depending upon a difference value between the grayscale voltage of the previous frame image signal (Vₚ) and the grayscale voltage of the current frame image signal (V_{c}). A compensation table with respect to the compensation voltage (Vᵣ) is stored in the form of a lookup table.

Where DCC is performed while a 3D image signal is displayed, there is a problem in that the level of compensation varies by each point in time when the image signal is scanned. As in ① of FIG. 4A, the liquid crystal layer reaches a desired grayscale voltage only after a predetermined time has passed after the image signal was applied. In FIG. 3, the liquid crystal layer of the first spot I on which the image signal is first scanned has a first liquid crystal voltage V_{I} of FIG. 4A when the shutter glasses 200 are opened, but a second liquid crystal voltage V_{II} of the second spot II on which the image signal is scanned after the first spot I is lower than the first liquid crystal voltage V_{I}. As the liquid crystal layer of the third spot III is exposed to the user immediately after the image signal is scanned, the user can visually perceive the image corresponding to the third liquid crystal voltage V_{III}. As the shutter glasses 200 are opened with different times for respective scanned spots elapsed after the image signal was scanned, the 3D image signal is unevenly compensated. In this case, as the image signal is scanned later in time, the response speed becomes slower, thereby causing the generating an afterimage, which is not desirable.

The image processing unit 30 according to this exemplary embodiment uses a plurality of compensation tables, in order to improve the response speed of the image signal and to evenly adjust the compensation level substantially applied to the liquid crystal layer. As shown FIG. 1, the current frame image signal is supplied to the signal processing unit 30 and is stored in the frame buffer 40 as a previous frame image signal. The current frame image signal stored in the frame buffer 40 is used as the previous frame image signal when compensating the next frame image signal. The plurality of compensation tables stored in the storage unit 50 have different compensation levels. A compensation table whose compensation level is small is used for the image signal whose scanning point in time is early, whereas the compensation table whose compensation level is large is used for the image signal whose scanning point in time is late. That is, the compensation level of the image signal is larger as the scanning point in time is later, but is smaller as the scanning point in time is earlier.

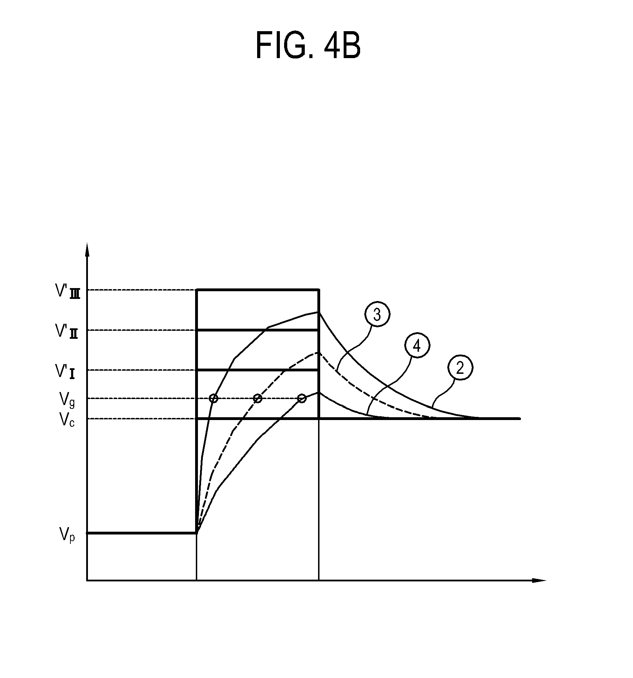

If the image signal is compensated by use of the plurality of compensation tables, a liquid crystal voltage graph as depicted in FIG. 4B is obtained. The compensation voltages V_{I}', V_{II}' and V_{III}' applied to each spot I, II III, respectively, are higher than the grayscale voltage of the current frame image signal V_{c}, and they have lower values in sequence of the compensation voltages applied to the third spot III V_{III}, to the second spot II V_{II} and to the first spot I V_{I}. A compensation table having the least compensation level is applied to the first spot I of the image signal that is first scanned. A compensation table having the largest compensation level is applied to the third spot III of the image signal, which is scanned last. The liquid crystal voltages ②, ③ and ④ with respect to each spot I, II and III have a substantially similar voltage V_{g} at the point in time to when the shutter glasses 200 are opened. The compensation level of a compensation table is set, based on the liquid crystal voltages to be changed during a period of (T-t₀), and a difference between the previous frame image signal and the current frame image signal, etc.

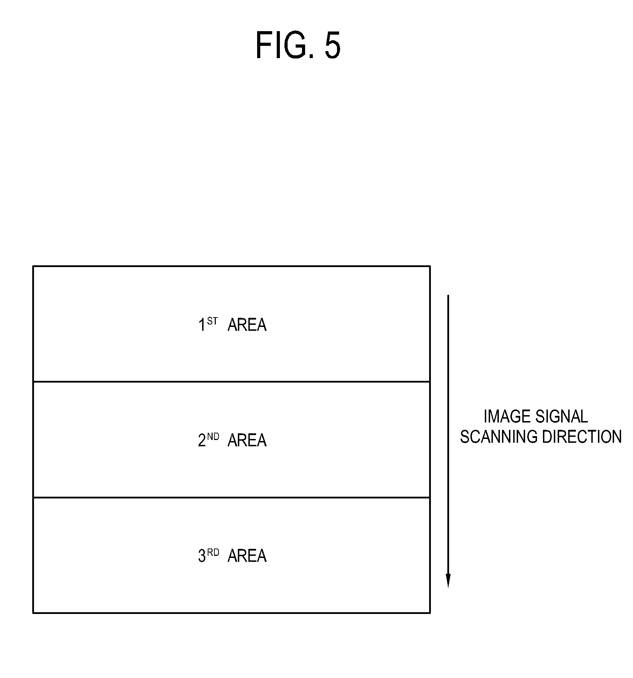

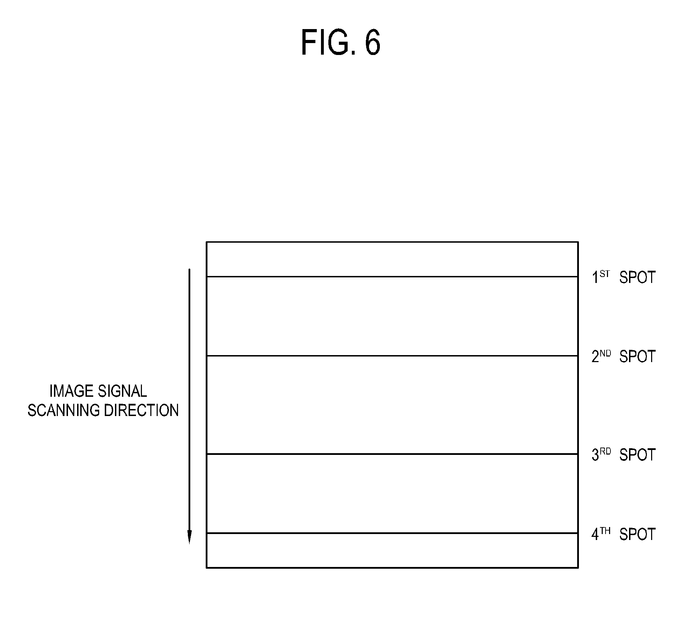

FIGS. 5 and 6 are diagrams to explain compensation tables used in compensating an image signal. As shown in FIG. 5, the display unit 10 is divided into three areas, and an image signal is compensated by different compensation tables for each area. The compensation tables are generated using a test image signal and a brightness measuring instrument. If a test image signal with a specific grayscale is scanned to the display unit 10, the brightness is measured by the brightness measuring instrument. Thereafter, the grayscale voltage of the test image signal is adjusted until a desired brightness is obtained, thereby forming compensation voltages of the compensation tables. To obtain a plurality of compensation tables, the brightness of the test image is measured in different areas of the display unit 10.

FIG. 6 explains a compensation method according to another exemplary embodiment of the LCD apparatus of FIG. 1. According to this exemplary embodiment, a compensation table is not applied by each of a plurality of areas dividing the display unit 10, but the compensation table is applied only to a specific spot. The storage unit 50 stores therein four compensation tables in total, composed of first through the fourth compensation tables, each corresponding to the first through the fourth spots, respectively.

The image processing unit 30 uses the first compensation table to compensate an image signal scanned before the first spot, and uses both the first and the second compensation tables to compensate an image signal scanned between the first spot and the second spot. The image processing unit 30 operates an interpolation value based on the values of the first and the second compensation values and uses the interpolation value to compensate the image signal scanned between the first and the second spots. A method of interpolating a mean value using two data points can be embodied by a variety of methods known to the public. In case of this exemplary embodiment, an interpolation value can be operated by using compensation voltages included in the first compensation table and compensation voltages included in the second compensation table, and using a point in time when the image signal is scanned as a variable. In this way, an image signal scanned between the second and the third spots and that scanned between the third and the fourth spots can be compensated. Where the image signal is compensated according to this exemplary embodiment, the compensation level of the image signal can be adjusted more minutely by each scanning point in time.

The number of compensation tables and the shape of the liquid crystal voltage, etc. described above in detail are merely used to describe exemplary embodiments of the present invention, and the protection scope of the present invention is not limited thereto.

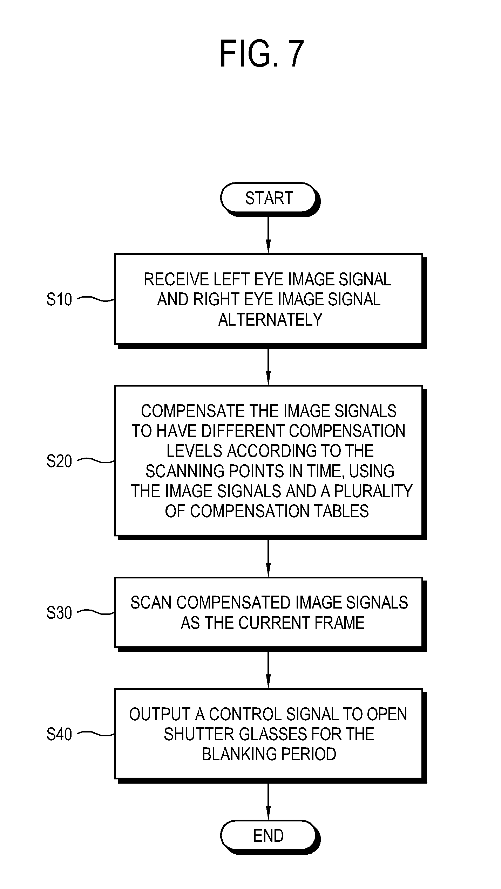

FIG. 7 is a control flow chart to explain a displaying method of the LCD apparatus of FIG. 1. Referring to FIG. 7, a method of displaying the image signal according to the present invention will be described below.

The LCD apparatus 100 receives alternately a left eye image signal and a right eye image signal included in a stereoscopic image S10.

The image processing unit 30 compensates an image signal using the previous frame image signal, the current frame image signal and a plurality of compensation tables stored in the storage unit 50, so that the image signals have different compensation levels according to the points in time when the image signals are scanned S20. As the point in time to be scanned becomes later, the compensation level becomes larger in order to increase the response speed of the liquid crystal layer.

The image processing unit 30 scans the compensated image signals sequentially to the display unit 10 as the current frame according to a specific direction S30.

When scanning of the image signals are completed, a control signal is output to the shutter glasses 200, in order to open the shutter glasses 200 for the blanking period T_{B} during which the scanned image signals are maintained S40.

According to the control signal, the left shutter and the right shutter of the shutter glasses 200 are alternately opened, and the user can visually perceive the left eye image signal and the right eye image signal alternately according to opening and closing of the shutter glasses 200.

Although a few exemplary embodiments of the present invention have been shown and described, it will be appreciated by those skilled in the art that changes may be made in these embodiments without departing from the principles and spirit of the invention, the scope of which is defined in the appended claims and their equivalents.

## Claims

1. A liquid crystal display (LCD) apparatus, comprising:
a display unit to which a plurality of image signals are sequentially scanned; and
an image processing unit which compensates the plurality of image signals to have different compensation levels according to points in time when the plurality of image signals are scanned to the display unit, using a previous frame image signal, a current frame image signal, and a plurality of compensation tables, and outputs the compensated plurality of image signals to the display unit as the current frame.

2. The LCD apparatus according to claim 1, wherein while a frame image signal is being scanned, the compensation levels become larger as the scanning points are later in time.

3. The LCD apparatus according to claim 1, wherein each of the compensation tables comprises a dynamic capacitance compensation table.

4. The LCD apparatus according to claim 1, wherein each of the plurality of image signals each comprises a left eye image signal and a right eye image signal; and
the image processing unit compensates the left eye image signal and the right eye image signal and outputs the compensated right image signal and the compensated left eye image signal alternately to the display unit.

5. The LCD apparatus of claim 4, further comprising a signal transmitting unit which outputs a control signal alternately to open external shutter glasses.

6. The LCD apparatus according to claim 5, wherein a frame has an image scanning period during which at least one of the plurality of image signals is scanned and a blanking period during which at least one of the scanned image signals is maintained, and
the control signal opens the shutter glasses for the blanking period.

7. The LCD apparatus of claim 4, further comprising a signal transmitting unit which outputs a control signal alternately to close external shutter glasses.

8. The LCD apparatus according to claim 1, further comprising a storage unit which stores the plurality of compensation tables therein.

9. The LCD apparatus according to claim 1, wherein the plurality of compensation tables comprise a first compensation table corresponding to a first spot and a second compensation table corresponding to a second spot, which is different from the first spot, and
the image processing unit operates an interpolation value based on the first and the second compensation tables, and compensates at least one of the plurality of image signals to be scanned between the first and the second spots using the interpolation value.

10. A displaying method of a liquid crystal display (LCD) apparatus comprising a display unit, comprising:
receiving a previous frame image signal and a current frame image signal;
compensating the plurality of image signals to have different compensation levels according to points in time when they the plurality of image signals are scanned to the display unit, using the previous frame image signal, the current frame image signal, and a plurality of compensation tables; and
scanning the compensated previous frame image signal and the current frame image signal sequentially to the display unit as a current frame.

11. The displaying method according to claim 10, wherein while a frame image signal is being scanned, the compensation levels become larger as the scanning points are later in time..

12. The displaying method according to claim 10, wherein the compensation tables each comprises a dynamic capacitance compensation table.

13. The displaying method according to claim 10, wherein the plurality of compensation tables comprises a first compensation table corresponding to a first spot and a second compensation table corresponding to a second spot, which is different from the first spot,
wherein the compensating the image signals comprises:
operating an interpolation value based on the first and the second compensation tables; and
compensating the image signal to be scanned between the first and the second spots, using the interpolation value.

14. The displaying method according to claim 10, wherein the image signal comprise a left eye image signal and a right eye image signal; and
the left eye image signal and the right eye image signal are alternately displayed to the display unit.

15. The displaying method according to claim 14, wherein a frame comprises an image scanning period during which the image signal is being scanned, and a blanking period during which the scanned image signal is being maintained,
further comprising outputting a control signal to open alternately external shutter glasses for the blanking period.
